# EUROPÄISCHE PATENTSCHRIFT

(11) **EP 1 198 375 B1**
(45) Veröffentlichungstag und Bekanntmachung des Hinweises auf die Patenterteilung: **14.12.2005**
(21) Anmeldenummer: 00949124.2
(22) Anmeldetag: 23.06.2000
(51) Int. Cl.: B60T 13/74

(54) **VERFAHREN ZUR BETÄTIGUNG EINER RADBREMSVORRICHTUNG**
METHOD FOR ACTUATING A WHEEL BRAKE DEVICE
PROCEDE POUR ACTIONNER UN DISPOSITIF DE FREINAGE DE ROUE

(30) Priorität: 08.07.1999 DE 19931821
(43) Veröffentlichungstag der Anmeldung: 24.04.2002
(73) Patentinhaber: ROBERT BOSCH GMBH, 70442 Stuttgart (DE)
(72) Erfinder: SCHUMACHER, Axel, D-77815 Buehl (DE)
(86) Internationale Anmeldenummer: PCT/DE2000/002056
(87) Internationale Veröffentlichungsnummer: WO 2001/003989

(56) Entgegenhaltungen:
- DE-A- 4 229 042
- DE-A- 19 844 840

## Beschreibung

### Stand der Technik

Die Erfindung betrifft ein Verfahren zur Betätigung einer Radbremsvorrichtung, insbesondere einer elektromechanischen Radbremsvorrichtung oder eines reibungsbehafteten, eine Federelastizität aufweisenden, mechanischen Systems.

Zur klaren Darstellung wird die Erfindung nachfolgend konkret anhand der Betätigung einer elektromechanischen Radbremsvorrichtung erläutert. Die Erfindung soll dadurch jedoch nicht auf elektromechanische Rädbremsvorrichtungen beschränkt werden, das erfindungsgemäße Verfahren ist beispielsweise an hydraulischen oder pneumatischen Radbremsvorrichtungen, insbesondere wenn diese Fremdkraft betätigt sind, und allgemein an reibungsbehafteten, eine Federelastizität aufweisenden, mechanischen Systemen anwendbar.

Elektromechanische Radbremsvorrichtungen sind an sich bekannt. Beispielshaft sei verwiesen auf die DE 42 29 042 A1. Die bekannten elektromechanischen Radbremsvorrichtungen weisen einen Elektromotor auf, dessen Rotationsbewegung von einem Getriebe auf ein Rotations/Translations-Umsetzungsgetriebe, üblicherweise einen Spindeltrieb übertragen wird, mit dem ein Reibbremsbelag an einen drehfest mit einem Fahrzeugrad verbundenen Bremskörper, beispielsweise eine Bremsscheibe oder eine Bremstrommel, andrückbar (Zuspannen) und wieder abhebbar (Lösen) ist. Zur Umsetzung der Rotationsbewegung des Elektromotors in eine Translationsbewegung zum Andrücken des Reibbremsbelags kann beispielsweise auch ein Nocken Verwendung finden. Auch ist es bekannt, einen Rotor des Elektromotors als Mutter des Spindeltriebs auszubilden und auf das Getriebe zwischen Elektromotor und Spindeltrieb zu verzichten.

Zum Bremsen wird bei den bekannten, elektromechanischen Radbremsvorrichtungen der Elektromotor in Zuspannrichtung bestromt, bis eine gewünschte Bremskraft errreicht ist. Die Bremskraft läßt sich solange erhöhen, bis ein quasi statischer Endzustand erreicht ist, in welchem ein Drehmoment des Elektromotors bei maximaler Bestromung nicht mehr ausreicht, die Andruckkraft des Reibbremsbelags gegen den Bremskörper weiter zu erhöhen.

### Vorteile der Erfindung

Das erfindungsgemäße Verfahren mit den Merkmalen des Anspruchs 1 hat den Vorteil, daß sich die Bremskraft der Radbremsvorrichtung über den Wert erhöhen läßt, den sie im quasi statischen Endzustand hat, die Bremswirkung wird wesentlich verbessert.

Weiterer Vorteil des erfindungsgemäßen Verfahrens ist, daß es keine äußeren Meß- oder Eingangssignale wie beispielsweise die von der Radbremsvorrichtung ausgeübte Bremskraft zu seiner Durchführung benötigt. Auf Sensoren, die die Andruckkraft des Reibbremsbelags an den Bremskörper messen oder dgl. kann daher verzichtet werden. Das erfindungsgemäße Verfahren kann an einer vorhandenen, insbesondere elektromechanischen Radbremsvorrichtung angewendet werden, ohne daß Veränderungen wie die Anbringung eines Sensors an der Radbremsvorrichtung vorgenommen werden müssen.

Auch bei Fading-Erscheinungen, also bei nachlassender Bremskraft der Radbremsvorrichtung in Folge von Überhitzung läßt sich das erfindungsgemäße Verfahren mit Vorteil anwenden, um die vor dem Fading vorhandene Bremskraft wieder zu erreichen oder auch zu überschreiten.

Der Erfindung liegt folgende Überlegung zugrunde: Die Radbremsvorrichtung ist nicht absolut starr, sie weist auch bei steifer Ausbildung eine Elastizität auf, gegen die der Elektromotor die Radbremsvorrichtung zuspannt. Des weiteren muß der Elektromotor beim Zuspannen eine Reibung beispielsweise des Getriebes und des Spindeltriebs überwinden, die aufgrund der zunehmenden Kräfte mit wachsender Zuspännung ansteigt. Bei hoher Zuspannkraft ist die Reibung groß, d. h. ein nicht vernachlässigbarer Anteil des Drehmoments des Elektromotors wird zur Überwindung der Reibung verbraucht und nur das darüberliegende Drehmoment des Elektromotors erhöht die Zuspannkraft weiter. Bei Erreichen des quasi statischen Endzustands kommen die beweglichen Teile der Radbremsvorrichtung zum Stillstand und die Reibung geht in die größere Haftreibung über. Eine weitere Erhöhung der Bremskraft wäre nur dann möglich, wenn das Drehmoment des Elektromotors so weit erhöht werden könnte, daß die Haftreibung überwunden wird und die beweglichen. Teile der Radbremsvorrichtung sich wieder bewegen.

Da sich das Drehmoment des Elektromotors nicht beliebig erhöhen läßt, wird beim erfindungsgemäßen Verfahren ein anderer Weg eingeschlagen: Um die Bremskraft nach Erreichen des quasi statischen Endzustands weiter zu erhöhen, wird die Radbremsvorrichtung während einer kurzen Zeitspanne in Löserichtung betätigt und anschließend erneut zugespannt. Durch die Betätigung in Löserichtung wird, und zwar mit Unterstützung durch die Elastizität der Radbremsvorrichtung und nicht gegen die Elastizität, die Haftreibung überwunden und die beweglichen Teile der Radbremsvorrichtung werden wieder in Bewegung gesetzt. Anschließend wird die Radbremsvorrichtung erneut zugespannt, wobei die Bremskraft größer als im quasi statischen Endzustand ist, da die Haftreibung nicht überwunden werden muß, sondern der Elektromotor gegen die geringere Gleitreibung arbeitet. Das Verfahren läßt sich mehrfach wiederholen, um die Bremskraft schrittweise weiter zu steigern. In Versuchen ließ sich die Bremskraft um etwa ein Drittel gegenüber dem Wert im quasi statischen Endzustand erhöhen.

Zum Betätigen der Radbremsvorrichtung in Löserichtung braucht der Elektromotor nicht unbedingt in Löserichtung bestromt werden, vielfach genügt es, seine Bestromung zu unterbrechen oder zu verringem, bevor der Elektromotor zum erneuten Zuspannen der Radbremsvorrichtung wieder mit maximaler Bestromung in Zuspannrichtung beaufschlagt wird. Auch wird die Radbremsvorrichtung nicht eigentlich gelöst, sondern die Betätigung in Löserichtung ist so kurz, daß die Bremskraft nicht oder allenfalls unmerklich verringert wird. Es ist nicht Zweck der Erfindung, die Bremskraft der Radbremsvorrichtung vorübergehend abzusenken und anschließend wieder zu erhöhen, sondern durch die Betätigung der Radbremsvorrichtung in Löserichtung sollen eventuelle Verspannungen in Lagern, Getrieben, Führungen und dgl., die aufgrund.der hohen Zuspannkraft der Radbremsvorrichtung im quasi statischen Endzustand auftreten können, abgebaut und die Haftreibung überwunden werden. Eine Erklärung dafür, daß die Bremskraft der Radbremsvorrichtung trotz kurzer Betätigung in Löserichtung nicht abnimmt, könnte in einer Hysterese aufgrund der Elastizität der Radbremsvorrichtung liegen. Jedenfalls war in Versuchen ein Rückgang der Bremskraft während der kurzen Betätigung der Radbremsvorrichtung in Löserichtung nicht meßbar. Dies kann entweder daran liegen, daß die Bremskraft tatsächlich nicht abgenommen hat, oder daran, daß die Abnahme der Bremskraft kleiner als die Meßgenauigkeit und damit vernachlässigbar war. Eine merkliche Verringerung der Bremskraft während der Betätigung der Radbremsvorrichtung in Löserichtung würde einen Fahrer stark verunsichern und zudem den Bremsweg verlängern, was vermieden werden soll und erfindungsgemäß nicht erwünscht ist. Mit dem Ausdruck im Anspruch 1, daß die Bremskraft nicht oder allenfalls unmerklich verringert wird, ist gemeint, daß die Radbremsvorrichtung nur so kurz in Löserichtung betätigt wird, daß sich eventuelle Verspannungen im Antrieb der Radbremsvorrichtung lösen und die Haftreibung in eine Gleitreibung übergeht.

Die Unteransprüche habe vorteilhafte Ausgestaltungen und Weiterbildungen des erfindungsgemäßen Verfahrens zum Gegenstand.

Zur schrittweisen Erhöhung der Bremskraft wird das erfindungsgemäße Verfahren gemäß Anspruch 2 mehrfach wiederholt. Gemäß Anspruch 3 wird das Verfahren nach einer vorgegebenen Zeitspanne nach Beginn des erneuten Zuspannens wiederholt. Dies hat den Vorteil, daß nicht festgestellt oder abgewartet werden muß, ob die Radbremsvorrichtung nach dem erneuten Zuspannen bereits zum Stillstand gekommen ist. Gemäß Anspruch 4 wird das Verfahren wiederholt, wenn die Radbremsvorrichtung/das System beim erneuten Zuspannen zum Stillstand gekommen ist oder jedenfalls nahezu stillsteht. Auf diese Weise wird bei jeder Wiederholung des Verfahrens eine maximale Erhöhung der Bremskraft bzw. der vom reibungsbehafteten, federelastischen mechanischen System ausgeübten Kraft erreicht.

Da sich die Bremskraft bzw. die vom System ausgeübte Kraft durch das erfindungsgemäße Verfahren nicht beliebig erhöhen läßt, sondern gegen einen Grenzwert strebt, ist gemäß Anspruch 5 die Anzahl der Wiederholungen begrenzt.

Gemäß Anspruch 6 wird ein Weg, den ein Betätigungselement der Radbremsvorrichtung bei deren Betätigung in Löserichtung zurücklegt, als Maß für die Betätigung in Löserichtung genommen. Hat das Betätigungselement einen festgelegten Weg in Löserichtung zurückgelegt, wird die Radbremsvorrichtung/das System erneut zugespannt. Der Weg des Betätigungselements in Löserichtung bestimmt also die kurze Zeitspanne, während derer die Radbremsvorrichtung/das System in Löserichtung betätigt wird. Es wird in diesem Falle keine Zeit gemessen. Das Betätigungselement kann beispielsweise ein Rotor des Elektromotors der Radbremsvorrichtung sein, der um einen vorgegebenen Winkel rückgedreht wird um die Radbremsvorrichtung in Löserichtung zu betätigen.

### Zeichnung

Die Erfindung wird nachfolgend anhand eines in der Zeichnung dargestellten Ausführungsbeispiels näher erläutert. Es zeigen:
- Figur 1: ein Übersichtsschaltbild einer elektromechanischen Radbremsvorrichtung; und
- Figur 2: ein Zeitdiagramm zur Verdeutlichung der Wirkungsweise des erfindungsgemäßen Verfahrens.

### Beschreibung des Ausführungsbeispiels

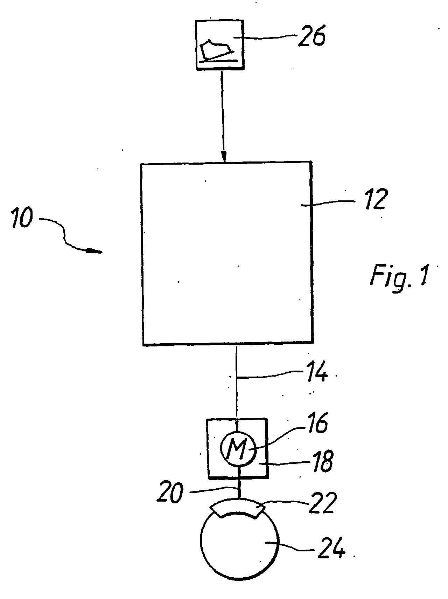

Figur 1 zeigt ein Übersichtsschaltbild einer an sich bekannten, elektromechanischen Radbremsvorrichtung 10. Mit 12 ist ein elektronisches Steuergerät dargestellt, welches über eine Ausgangsleitung 14 einen Elektromotor 16 steuert. Der Elektromotor 16 ist Teil eines Bremsenstellers 18, der über eine mechanische Verbindung 20 eine Bremseinrichtung 22 betätigt, mit der ein Bremskörper 24, beispielsweise eine Bremsscheibe bremsbar ist, die drehfest mit einem nicht dargestellten Fahrzeugrad verbunden ist. Als Eingangssignal erhält das Steuergerät 12 ein Signal eines Bremspedalsensors 26, mit dem eine Kraft, mit der ein Bremspedal niedergetreten, oder ein Weg, um den das Bremspedal niedergetreten wird, gemessen wird.

In einem nicht dargestellten Versuchsaufbau zur Durchführung des erfindungsgemäßen Verfahrens wies die Radbremsvorrichtung 10 ein mit dem Elektromotor 16 antreibbares Tellerradgetriebe auf, dessen Tellerrad drehfest auf eine Mutter eines Spindeltriebs aufgesetzt war. Tellerradgetriebe und Spindeltrieb bilden dabei den Bremsensteller 18. Mit einer Spindel des Spindeltriebs war ein in einem Bremssattel einliegender Reibbremsbelag an eine Bremsscheibe 24 der als Scheibenbremsvorrichtung ausgebildete Radbremsvorrichtung andrückbar. Die Spindel bildet die mechanische Verbindung 20, der Bremssattel bildet die Bremseinrichtung 22. Aufgrund der auch bei steifer Ausbildung vorhandenen Elastizität insbesondere des Bremssattels, aber auch der übrigen Komponenten der Radbremsvorrichtung kann man sich die mechanische Verbindung 20 als Federelement vorstellen.

Bei der üblichen Betätigung der Radbremsvorrichtung 10 wird abhängig vom Fahrerwunsch der Elektromotor 16 solange in einer Zuspannvorrichtung bestromt, bis eine vom Fahrerwunsch abhängige Bremskraft erreicht ist. Die dabei maximal erreichbare Bremskraft tritt auf, wenn der Elektromotor 16 mit einer maximalen Bestromung beaufschlagt wird. Er spannt die Radbremsvorrichtung 10 solange zu, bis sein Drehmoment nicht mehr ausreicht, die Zuspannkraft weiter zu erhöhen. Dies ist der sog. quasi statische Endzustand.

Soll die Bremskraft weiter erhöht werden, wird erfindungsgemäß die Radbremsvorrichtung 10 für eine kurze Zeitspanne in Löserichtung betätigt, wozu es ausreichen kann, die Bestromung des Elektromotors 16 kurzzeitig zu unterbrechen, es ist nicht unbedingt erforderlich, den Elektromotor 16 in Löserichtung zu Bestromen. Anschließend wird der Elektromotor 16 wieder mit maximaler Bestromung in Zuspannrichtung bestromt. Durch die kurzzeitige Betätigung der Radbremsvorrichtung 10 in Löserichtung haben sich eventuell aufgrund der hohen Zuspannkraft im Bremsensteller 18 vorhandene Spannungen gelöst und eine Haftreibung, die durch den Stillstand der Radbremsvorrichtung 10 ab Erreichen des quasi statischen Endzustandes eintritt, ist, und zwar unter Ausnutzung der Elastizität der Radbremsvorrichtung 10, überwunden worden. Beim anschließenden erneuten Zuspannen wird dadurch eine erhöhte Bremskraft erreicht; die über derjenigen des quasi statischen Endzustands liegt. Die Zeitspanne zur Betätigung der Radbremsvorrichtung 10 in Löserichtung ist so kurz gewählt, daß die Bremskraft nicht oder allenfalls unmerklich verringert wird.

Zur weiteren, schrittweisen Erhöhung der Bremskraft wird das erfindungsgemäße Verfahren wiederholt. Die Wiederholung kann erfolgen, wenn der Elektromotor 16 und der Bremsensteller 18 beim erneuten Zuspannen vollständig oder nahezu zum Stillstand kommen. Die Wiederholung des Verfahrens kann auch nach einer fest vorgegebenen Zeitspanne erfolgen, die auch bereits vor dem Stillstand des Elektromotors 16 und des Bremsenstellers 18 beim erneuten Zuspannen enden kann.

Auch wenn die Bremskraft der Radbremsvorrichtung 10 beispielsweise infolge von Überhitzung (Fading) während einer Bremsung nachläßt, kann durch Anwendung des erfindungsgemäßen Verfahrens die Bremskraft wieder auf den ursprünglichen Wert oder auch darüber hinaus erhöht werden. Die Verwendung des erfindungsgemäßen Verfahrens ist nicht auf elektromechanische Radbremsvorrichtungen begrenzt, sie läßt sich insbesondere auch für elektrohydraulische oder elektropneumatische Bremsanlagen verwenden. Darüber hinaus ist das erfindungsgemäße Verfahren nicht auf Radbremsvorrichtungen beschränkt, es läßt sich auch auf andere, reibungsbehaftete, eine Federelastizität aufweisende, mechanische Systeme übertragen.

Eine bevorzugte Realisierung des erfindungsgemäßen Verfahrens besteht darin, daß es als Programm in einen Mikrocomputer der Steuereinheit 12 implementiert ist.

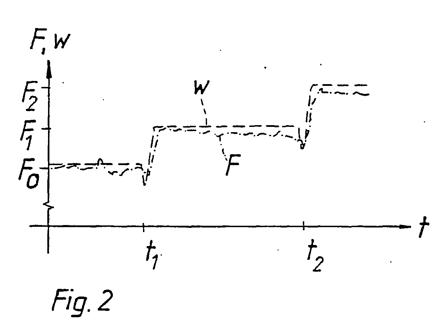

Der Ablauf des erfindungsgemäßen Verfahrens läßt sich anhand des Zeitdiagramms in Figur 2 verdeutlichen. Dort sind der Verlauf der Andruckkraft F eines Reibbremsbelags an die Bremsscheibe 24 mit einer Strich-Punkt-Linie und ein Drehwinkel w eines Rotors des Elektromotors 16 mit einer Strichlinie über der Zeit t aufgetragen. Die versuchsweise verwendete elektromechanische Radbremsvorrichtung 10 ist eingangs der Beschreibung des Ausführungsbeispiels angegeben worden. Mit F₀ ist die Andruckkraft des Reibbremsbelags an die Bremsscheibe bei maximaler Bestromung des Elektromotors 16, also im quasi statischen Endzustand der Radbremsvorrichtung 10 angegeben. Um die Andruckkraft F weiter zu steigern, ist im beschriebenen Versuch der Rotor des Elektromotors 16 zum Zeitpunkt t₁ um einen Winkel von ca. 15° in Löserichtung rückgedreht und anschließend der Elektromotor 16 wieder in Zuspannrichtung bestromt worden. Wie in Figur 2 zu sehen, dreht sich beim erneuten Zuspannen der Rotor des Elektromotors 16 über seine Stellung im quasi statischen Endzustand hinweg, ebenfalls erhöht sich die Andruckkraft F stufenartig auf einen Wert F₁, der größer als die Andruckkraft F₀ im quasi statischen Endzustand ist. Zum Zeitpunkt t₂ ist der Rotor des Elektromotors 16 wiederum um 15° rückgedreht und anschließend der Elektromotor wieder mit maximaler Bestromung beaufschlagt worden, wodurch sich der Rotor wieder weitergedreht und die Andruckkraft F auf den Wert F₂ weiter erhöht hat. Durch Wiederholung des Verfahrens ließ sich die Andruckkraft F um etwa ein Drittel gegenüber der Andruckkraft F₀ im quasi statischen Endzustand der Radbremsvorrichtung 10 erhöhen. Die Zeitspanne des Rückdrehens des Rotors um 15° und des anschließenden Vorwärtsdrehens über die ursprüngliche Stellung hinaus betrug ca. 15 ms der Zeitabstand zwischen zwei Wiederholungen lag bei etwa 0,15 bis 0,2 Sekunden.

Die Zeitspanne, während der die Radbremsvorrichtung 10 in Löserichtung betätigt wird, war im beschriebenen Versuch durch den Winkel, um den der Rotor des Elektromotors 18 zurückgedreht worden ist, festgelegt.

## Patentansprüche

1. Verfahren zur Betätigung einer Radbremsvorrichtung, insbesondere einer elektromechanischen Radbremsvorrichtung, **dadurch gekennzeichnet, daß** zur Erhöhung einer Bremskraft nach Erreichen eines quasi statischen Endzustands die Radbremsvorrichtung (10) während einer kurzen Zeitspanne in Löserichtung betätigt und anschließend erneut zugespannt wird, und daß die Zeitspanne der Betätigung in Löserichtung so kurz gewählt ist, daß die Bremskraft nicht oder allenfalls unmerklich verringert wird.

2. Verfahren nach Anspruch 1, **dadurch gekennzeichnet, daß** das Verfahren wiederholt wird.

3. Verfahren nach Anspruch 2, **dadurch gekennzeichnet, daß** das Verfahren nach einer vorgegebenen Zeitspanne nach Beginn des erneuten Zuspannens wiederholt wird.

4. Verfahren nach Anspruch 2, **dadurch gekennzeichnet, daß** das Verfahren wiederholt wird, wenn die Radbremsvorrichtung (10) beim erneuten Zuspannen zum Stillstand kommt.

5. Verfahren nach Anspruch 2, **dadurch gekennzeichnet, daß** die Anzahl der Wiederholungen begrenzt ist.

6. Verfahren nach Anspruch 1, **dadurch gekennzeichnet, daß** die kurze Zeitspanne, während der die Radbremsvorrichtung (10) in Löserichtung betätigt wird, durch einen Weg, um den ein Betätigungselement der Radbremsvorrichtung (10) in Löserichtung bewegt wird, festgelegt ist.

## Claims

1. Method for actuating a wheel brake apparatus, in particular an electromechanical wheel brake apparatus, **characterized in that**, in order to increase a braking force after a quasi-steady end state has been reached, the wheel brake apparatus (10) is actuated in the releasing direction for a short period of time and subsequently applied again, and **in that** the period of time for actuation in the releasing direction is selected to be so short that the braking force is not reduced or reduced only to an unnoticeable extent.

2. Method according to Claim 1, **characterized in that** the method is repeated.

3. Method according to Claim 2, **characterized in that** the method is repeated after a predefined period of time after the beginning of the renewed application.

4. Method according to Claim 2, **characterized in that** the method is repeated when the wheel brake apparatus (10) comes to a standstill during the renewed application.

5. Method according to Claim 2, **characterized in that** the number of repetitions is limited.

6. Method according to Claim 1, **characterized in that** the short period of time during which the wheel brake apparatus (10) is actuated in the releasing direction is fixed by a distance by which an actuating element of the wheel brake apparatus (10) is moved in the releasing direction.

## Revendications

1. Procédé pour manoeuvrer un dispositif de frein sur roue, en particulier un dispositif électromécanique de frein sur roue,
**caractérisé en ce que**
pour augmenter une force de freinage après qu'un état final pratiquement statique a été atteint, le dispositif de frein sur roue (10) est manoeuvré en direction de desserrage pendant une brève durée et ensuite est de nouveau serré et
la durée de manoeuvre en direction de desserrage est choisie assez brève pour que la force de freinage ne soit pas réduite ou le soit tout au plus imperceptiblement.

2. Procédé selon la revendication 1,
**caractérisé en ce que**
le procédé est répété.

3. Procédé selon la revendication 2,
**caractérisé en ce que**
le procédé est répété après un certain temps après que le nouveau serrage a commencé.

4. Procédé selon la revendication 2,
**caractérisé en ce que**
le procédé est répété lorsque le dispositif de frein sur roue (10) s'arrête après un nouveau serrage.

5. Procédé selon la revendication 2,
**caractérisé en ce que**
le nombre de répétitions est limité.

6. Procédé selon la revendication 1,
**caractérisé en ce que**
la brève durée pendant laquelle le dispositif de frein sur roue (10) est manoeuvré en direction de desserrage est déterminée par un trajet sur lequel un élément de manoeuvre du dispositif de frein sur roue (10) se déplace en direction de desserrage.
